# EUROPEAN PATENT APPLICATION

(11) **EP 2 704 078 A1**
(43) Date of publication of application: **05.03.2014**
(21) Application number: 13176570.3
(22) Date of filing: 15.07.2013
(51) Int. Cl.: G06Q 20/34, G06F 21/00, G06Q 20/38, G07F 7/08, G07F 7/10

(54) **Security module and method of securing payment information**

(30) Priority: 31.08.2012 US 201261695978 P; 12.09.2012 US 201213612305
(71) Applicant: NCR Corporation, Duluth, GA 30096 (US)
(72) Inventor: Rogers, Ron, Suwanee, GA Georgia 30024 (US)
(74) Representative: MacLeod, Roderick William

(57) **Abstract**

A security module (14) of a computer (10) which is invisible to an operating system (20) executed by a processor (12) of the computer (10) and which establishes an encrypted session for receiving payment data from a payment peripheral (30).

## Description

The present invention relates to payment peripherals and security methods for payment information and more specifically to a security module and a method of securing payment information.

Protection of payment information including payment card data and personal identification numbers (PINs) from theft is a problem for many companies in many industries. To deal with this problem, the Payment Card Industry (PCI) provides security guidelines for payment peripherals, such as card readers, keyboards containing card readers, and PIN entry devices. The guidelines require that such peripherals meet certain requirements for data encryption and encryption key management.

For example, each payment peripheral within a traditional point-of-sale (POS) system that captures card data must be able to encrypt the data using a PCI approved data encrypting security module and its own static PCI format encryption key. Encryption keys must be tracked against the serial numbers of the payment peripherals. Each payment peripheral must be handled, shipped, serviced, and controlled with special security.

A problem with current PCI compliant payment peripherals is that they are subject to attack from third party "sniffer" devices which attempt to obtain the encryption keys provided by banks or payment providers.

Therefore, it would be desirable to provide an alternative method of securing payment information.

According to a first aspect of the present invention there is provided a method of securing payment information comprising: sending a key to a peripheral by a security module of a computer; and establishing with the peripheral using the key an encrypted session which is invisible to an operating system executed by a processor of the computer by the security module.

The method optionally further comprises: polling the peripheral with an unencrypted message including a request for a peripheral identifier of the peripheral by the security module; receiving an unencrypted reply message containing the peripheral identifier; and determining that the peripheral identifier is in a list of peripherals capable of communicating over an encrypted connection.

The method optionally further comprises: polling the peripheral during startup of the computer.

Polling optionally comprises: polling the peripheral after connection of the peripheral to the computer.

Optionally, the key comprises a complimentary key to a seed key stored within the peripheral; wherein sending further comprises sending the complimentary key to the peripheral; and wherein the peripheral combines the complimentary key with the seed key to form the session key.

Optionally, a copy of the seed key is also stored within the security module and wherein establishing comprises: combining the complimentary key with the copy of the seed key to form a copy of the session key by the security module.

Optionally, establishing further comprises: sending a test message to the peripheral and a command to encrypt and return an encrypted test message; receiving a reply message from the peripheral; beginning the encrypted session when the reply message is decryptable and a decrypted reply message matches the test message.

Optionally, the method further comprises: sending a different key to another peripheral by the security module; and establishing using the different key another encrypted session with the other peripheral by the security module.

Optionally, the key is different than a previous key from a previous encrypted session with the peripheral.

The method optionally further comprises: determining that the encrypted session has ended; sending a different key to the peripheral by the security module; and establishing using the different key another encrypted session with the peripheral by the security module.

The method optionally further comprises: polling the peripheral during the encrypted session by the security module; receiving a response from the peripheral during the encrypted session by the security module; and sending a different key to the peripheral to continue the encrypted session by the security module.

The method optionally further comprises: monitoring the encrypted session for a session ending condition by the security module; and terminating the encrypted session upon detection of the session ending condition.

The method optionally further comprises: monitoring the encrypted session for a session ending condition by the security module; and terminating the encrypted session upon detection of the session ending condition; wherein the session ending condition comprises a failure of the peripheral to respond to a message from the security module.

The method optionally further comprises: monitoring the encrypted session for a session ending condition by the security module; and terminating the encrypted session upon detection of the session ending condition; wherein the session ending condition comprises receiving a response from the peripheral without the peripheral identifier in the list.

The method optionally further comprises: polling another peripheral with another unencrypted message including a request for another peripheral identifier of the other peripheral by the security module; and determining that the other peripheral identifier is not in the list of peripherals.

Optionally, the other peripheral includes another payment peripheral with its own security module.

The other peripheral may not be a payment peripheral.

According to a second aspect of the present invention there is provided a computer comprising: a processor which executes an operating system; and a security module which is invisible to the operating system which establishes an encrypted session for receiving payment data from a payment peripheral.

Optionally, the computer further comprises an enclosure containing both the processor and the security module.

Optionally, the computer further comprises a first enclosure containing the processor and a second enclosure outside the first enclosure containing the security module.

According to a third aspect of the present invention there is provided a security module of a computer which is invisible to an operating system executed by a processor of the computer and which establishes an encrypted session for receiving payment data from a payment peripheral.

According to a fourth aspect of the present invention there is provided a method of securing payment information comprising: polling a peripheral with a message including a request for a peripheral identifier of the peripheral by a security module of a computer; and establishing an encrypted session with the peripheral by the security module when the peripheral responds with a reply message containing the peripheral identifier and the peripheral identifier is in a list of peripherals capable of communicating over an encrypted connection; wherein the encrypted session is invisible to an operating system executed by a processor of the computer.

In accordance with the teachings of the present invention, a security module and a method of securing payment information is provided.

An example security module is invisible to an operating system executed by a processor of the computer and which establishes an encrypted session for receiving payment data from a payment peripheral, such as card reader, a personal identification number (PIN) keypad or "PIN pad", and/or a signature capture pad.

An example method includes polling a peripheral, receiving a reply message from the peripheral, and determining whether the peripheral is capable of communicating over an encrypted connection. If the peripheral is capable of receiving a session key and encrypting data, the method further includes establishing a new session key, establishing an encrypted session with the peripheral using the session key, and monitoring for session ending conditions.

Incorporation of the security module within a computer facilitates use of low-cost peripherals which do not store static keys, instead of high-cost payment peripherals with stored bank or financial service provider encryption keys, security modules, and encryption key management. Use of these low-cost peripherals avoids associated inventory and safeguarding requirements associated with high-cost peripherals with stored keys.

The security module may support multiple encryption key slots makes the security module capable of managing different types of encryption keys for different environments and systems, for example, with support for both financial network transactions as well as retail payment acquirer network transactions.

The security module can poll the individual peripherals in low level non-encrypted protocol to determine what type of peripheral is on each port and if that peripheral is capable of operating in an encrypted session or not. This allows a retail system to incorporate a mix of encryption capable and non-encryption capable peripherals.

The security module may dynamically establish different session keys for each new session. In the example embodiment, a peripheral stores the session key as long as the peripheral is powered, and uses the session key to encrypt data it sends to the security module so long as the encrypted session is not interrupted or ended.

The security module may continue to poll a peripheral periodically or at predetermined times after it has initially established a session to establish new session keys to continue sessions. For example, the security module may establish initial communication using a first key and then send a second key to the peripheral for use in further communications, which may be tailored to the requirements of the peripheral. The peripheral replaces session keys in its memory with new session keys established by the security module.

The present invention may take form in various components and arrangement of components and in various methods. The drawings are only for purposes of illustrating example embodiments and alternatives and are not to be construed as limiting the invention.

Fig. 1 is a block diagram of a transaction system with a computer containing the security module.

Fig. 2 is a flow diagram illustrating operation of a security module.

Fig. 3 is a block diagram of a transaction system with an external security module connected to a computer.

Fig. 4 is a block diagram of a transaction system with a peripheral containing the security module.

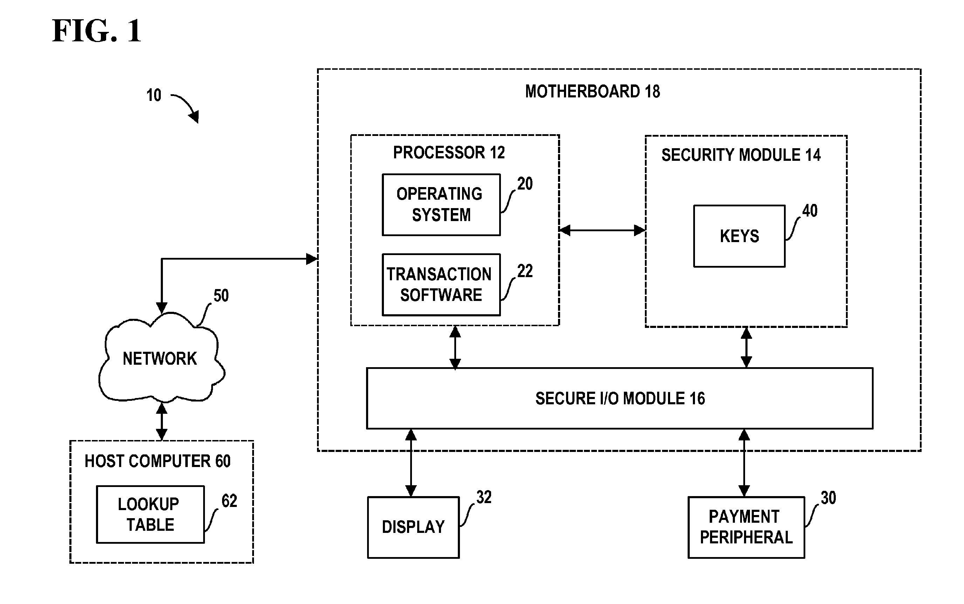

With reference to Fig. 1, a transaction system includes computer 10. Computer 10 includes motherboard 18, which includes one or more processors 12, security module 14. Computer 10 additionally includes display 32 and one or more payment peripherals 30. An example computer 10 may include a personal computer configured as a point-of-sale (POS) transaction computer. Other example computers and environments are also envisioned.

Processor 12 executes an operating system 20 such as a Microsoft, Linux, Apple, or other operating system. Processor 12 may execute other computer software which may be stored in a computer readable medium, such as a memory. For example, computer 10 may execute transaction software 22 which displays transaction screens on display 32 for guiding an operator through a transaction and receives operator inputs and selections during the transaction.

Computer 10 further includes graphics circuitry either for providing display screens to display 32, network circuitry for connecting to network 50, and peripheral connection circuitry such as Universal Serial Bus (USB), serial RS-232, serial RS-485, firewire, or other circuitry for connecting peripherals, including some or all of peripherals 30. Operating system 20 may establish connections with some or all of peripherals 30 at a driver level.

Computer 10 may be coupled to other computers, including an in-store or remote (e.g., cloud) host computer 60 via network 50. Network 50 may include one which uses the transmission control protocol/internet protocol (TCP/IP). Network 50 may include a combination of local area and wide area networks. Network 50 may include any combination of wireless or wired networks. Network 50 may include a combination of private and public networks, including a global communication network, also known as the Internet.

Security module 14 may be part of computer 10, either integrally included during manufacture of motherboard 18 or inserted within a socket on motherboard 18 (Fig. 1). Processor 12 and security module 14 may be separate modules. Alternatively, the functions of security module 14 may be combined into processor 12. For example, processor 12 may include an Intel Core vPro brand processor.

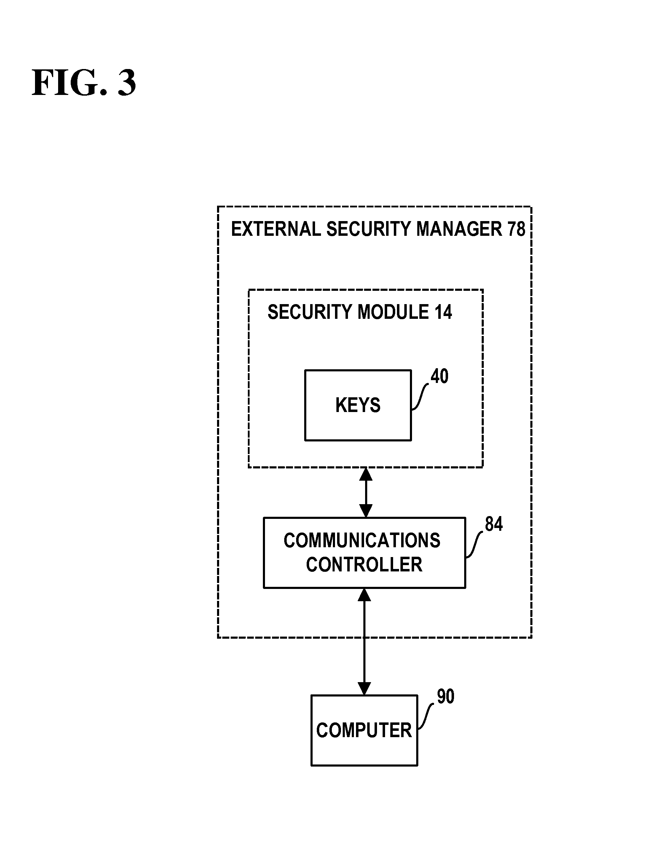

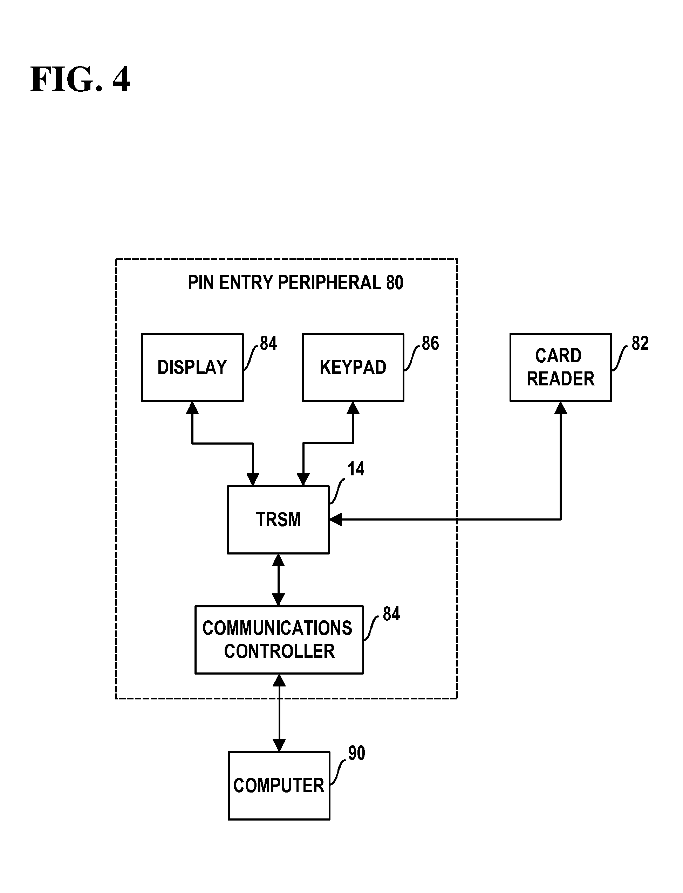

In other example embodiments, security module 14 may be external to computer 10. For example, security module 14 may be incorporated into its own separately housed component for retrofitting existing computers without built-in capability (Fig. 3) or into a peripheral (Fig. 4), either of which may be connected to computer 10 through peripheral connection circuitry.

Security module 14 may be implemented using hardware logic, software logic, or a combination of both.

Security module 14 protects customer information received from one or more payment peripherals 30 using encryption. Security module 14 may communicate with payment peripherals 30 via standard protocols and/or proprietary protocols via I/O module 16 and the peripheral connection circuitry. For example, security module 14 may communicate encrypted data using a standard universal serial bus (USB) protocol. Security module 14 and secure I/O module 16 may be housed in a common enclosure and considered together as one example security module.

Security module 14 establishes an encrypted session with a payment peripheral 30 through secure I/O module 16. Payment peripheral 30 then encrypts all data it sends to security module 14. Security module 14 decrypts and provides the data received from peripheral 30 to transaction software 22. Security module 14 also encrypts any data it sends to peripheral 30.

Security module 14 preferably controls the flow of encrypted data from payment peripheral 30 independently of operating system 20, with operating system 20 only establishing a connection with payment peripheral 30 at a driver level. Security module 14 is invisible to operating system 20. Operating system 20 has no driver or other control or interaction with security module 14 or the encrypted session between security module 14 and peripheral 30. In the case of the Intel Core vPro brand processor, operating system 20 has no driver or other control or interaction with the portion of the processor that performs the functions of security module 14. This minimizes the chance of a fraudster gaining access to the encryption keys in security module 14 through operating system 20.

Secure I/O module 16 facilitates connection of security module 14 to peripherals 30 under control of security module 14. Secure I/O module 16 polls all peripherals upon power up to obtain unique peripheral or device identifiers. Secure I/O module 16 determines if device(s) are acceptable to communicate with. If a unique identifier matches a corresponding identifier in an approved devices list then, secure I/O module 16 queries the peripheral to determine if it can communicate via an encrypted data link. If the peripheral can communicate via an encrypted data link, then secure I/O module 16 issues a test message to the peripheral, upon which secure I/O module 16 expects a certain encrypted response. If the response matches what is expected, then secure I/O module 16 establishes a session with the peripheral, occasionally "testing" the unique identifier of the peripheral to ensure a substitute peripheral has not somehow been substituted.

Security module 14 also stores encryption keys 40, which may include communication or session keys, financial provider keys, and retail provider keys. Host computer 60 may manage and provide keys 40 to security module 14.

Security module 14 establishes session keys to communicate with each individual payment peripheral 30. Thus, security module 14 provides multiple key slots for establishing encrypted connections with a plurality of different payment peripherals 30.

Example payment peripherals 30 may include, alone or in combination, a card reader, a personal identification number (PIN) keypad or "PIN pad", and a signature capture pad. Payment peripheral 30 may additionally include a display. The card reader may read one or more types of payment cards, including but not limited to, credit, debit, smart, or other card.

Different combinations are envisioned. For example, the display and PIN pad may be located within a common enclosure and coupled to computer 10 over one connection, and the card reader may be a separately housed payment peripheral 30 with a separate second connection to computer 10.

Payment peripheral 30 may be of a type which stores encryption keys or of another type which does not store encryption keys.

Payment peripheral 30 is preferably tamper-resistant. Tamper-resistant features may include electrical circuits and switches that detect opening of the peripheral enclosure and that erase the keys and/or optionally the peripheral operating software or firmware from peripheral memory, thereby disabling peripheral 30. If payment peripheral 30 does not store encryption keys, individual components within payment peripheral 30 may only satisfy relevant requirements of the PCI standard for such types of payment devices. For example, a payment peripheral 30 with a PIN pad and card reader that does not store encryption keys may still preferably be tamper-resistant, and the keypad and card reader resistant to breach and sniffing.

In one example embodiment, peripheral 30 includes one or more unique device identifiers, such as a serial number, and a seed encryption key. Security module 14 also has the seed encryption key. An example session key results from the combination of the seed key with a complimentary key stored in a lookup table 62 with the device identifier.

Lookup table 62 stores device identifiers for peripherals 30 that are capable of communicating over an encrypted connection. In an example embodiment, lookup table 62 also stores keys for establishing encrypted sessions with such peripherals 30.

Lookup table 62 may be stored in any suitable location. For example, host computer 60 may store lookup table 62. In another example, computer 10 may store lookup table 62 locally. In yet another example, security module 14 may store lookup table 62.

Security module 14 may communicate with peripherals 30 which do not support an encrypted session. Security module 14 may also communicate with peripherals 30 which have their own security modules, including payment peripherals which store encryption keys. Security module 14 does not establish encrypted sessions with such peripherals, since all payment data is from such peripherals are already in a secure format and commands to such peripherals must remain in the language native to such peripherals.

Security module 14 is preferably tamper resistant to prevent access to the keys. Tamper resistance may include one or more of electrical and mechanical safeguards to prevent physical tampering with security module 14. For example, security module 14 may include electrical circuits and switches that detect opening of the computer enclosure, physical intrusion into security module 14 or an enclosure around security module 14, and that erase the keys and optionally the software or firmware from security module 14, thereby disabling security module 14.

Secure I/O module 16 may be housed within the same physical enclosure as security module 14. Thus, secure I/O module 16 may rely on the same tamper resistance design and security as implemented for security module 14.

Computer 10 may include additional peripherals for its purpose. For example, computer 10 may include an input device which may be combined with display 32 to form a touch screen. Computer 10 may further include a barcode reader and a receipt printer.

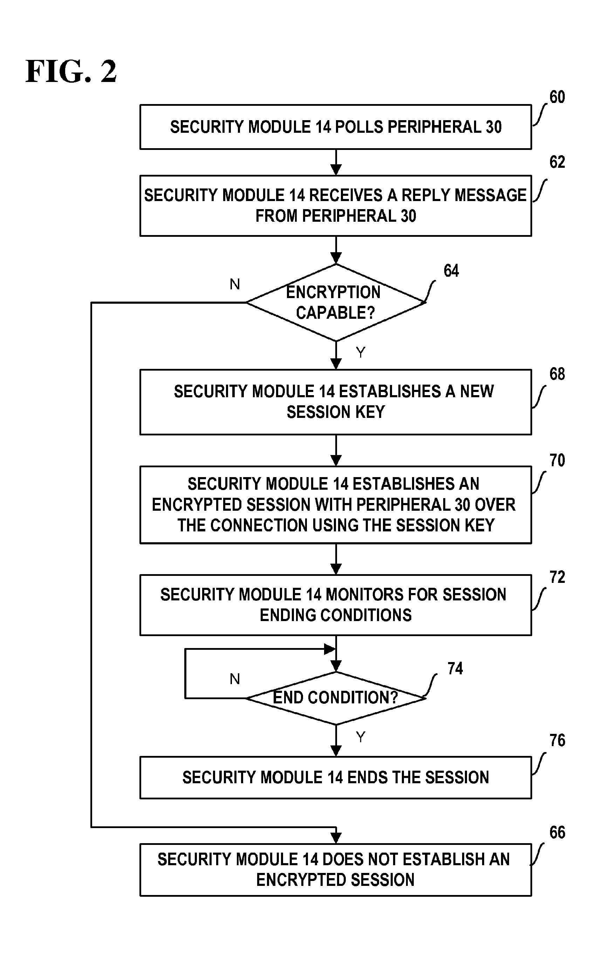

Referring now to Fig. 2, an example method of operation of security module 14 is illustrated.

In step 60, security module 14 polls a peripheral 30 through secure I/O module 16. Security module 14 may poll each peripheral 30 in a low-level non-encrypted protocol, such as USB, serial, or other protocol native to the peripheral 30. For example, security module 14 may send a clear text message to peripheral 30. In another example, security module 14 may send a token with the clear text message. This allows security module 14 to support a mix of encryption capable peripherals 30 and non-encryption capable peripherals 30.

In an example embodiment, the polling message includes a request for a peripheral identifier, such as a peripheral serial number or a USB Human Interface Device (HID) profile stored within peripheral 30. Security module 14 may request additional or other information, such as whether peripheral 30 is capable of communicating over an encrypted connection as sort forth below.

Security module 14 may poll each peripheral 30 upon system startup/ when computer 10 is turned on. Security module 14 may also poll an individual peripheral 30 after the individual peripheral 30 is connected to computer 10 or powered up, or after operating system 20 has recognized the individual peripheral 30 and loaded its driver.

In step 62, security module 14 receives a reply message from peripheral 30.

In an example embodiment, security module 14 receives an unencrypted return message from peripheral 30 containing the peripheral identifier. For example, security module 14 may receive a clear text message from peripheral 30. In another example, security module 14 may receive a token with the clear text message.

In step 64, security module 14 determines whether peripheral 30 is capable of communicating over an encrypted connection. If peripheral 30 is capable of receiving a session key and encrypting data it sends to security module 14, operation proceeds to step 68. Otherwise, operation terminates without security module 14 establishing an encrypted connection in step 66.

In an example embodiment, security module 14 looks for the peripheral identifier and a complimentary encryption key in lookup table 62. If the peripheral identifier of the polled peripheral 30 is in the list, then operation proceeds to step 68.

In step 68, security module 14 establishes a new session key. Security module 14 may establish the same or a different session key for each peripheral 30.

In an example embodiment, security module 14 sends a complimentary key to peripheral 30 in an unencrypted message. Peripheral 30 combines the complimentary key with the seed key to form a combined session key.

In step 70, security module 14 establishes an encrypted session with peripheral 30 over the connection using the session key.

In an example embodiment, security module 14 sends a command to send an encrypted test message to peripheral 30. Peripheral 30 uses the session key to encrypt a test message and sends the encrypted test message to security module 14. Security module 14 receives the encrypted test message, combines the complimentary key with the seed key to form the session key, and tries to decrypt the message. If security module 14 receives a reply message, is able to decrypt the message, and determines that the decrypted test message matches the sent test message, security module 14 accepts peripheral 30 as trusted and begins an encrypted session. Otherwise, security module 14 does not treat peripheral 30 as trusted and does not begin an encrypted session.

Security module 14 may dynamically establish different session keys for each new session. In the example embodiment, peripheral 30 stores the session key as long as peripheral 30 is powered, and uses the session key to encrypt data it sends to security module 14 so long as the encrypted session is not interrupted or ended. Security module 14 encrypts any data it sends to peripheral 30 using the same session key.

In another example embodiment, security module 14 may continue to poll peripheral 30 periodically or at predetermined times after it has initially established a session to establish new session keys to continue sessions. For example, security module 14 may establish initial communication using a first key and then send a second key to peripheral 30 for use in further communications, which may be tailored to the requirements of peripheral 30. Peripheral 30 replaces session keys in its memory with new session keys established by security module 14.

In step 72, security module 14 monitors for session ending conditions. If a security module 14 detects a session-ending condition in step 74, then security module 14 ends the session in step 76.

For example, if security module 14 does not receive a response to a message because peripheral 30 is offline or powered down, or if security module 14 receives a response without a peripheral identifier or without a peripheral identifier that is in lookup table 62, security module 14 ends the session.

Advantageously, incorporation of security module 14 within computer 10 facilitates use of low-cost peripherals without built-in PCI format bank or financial service provider encryption keys, security modules, and encryption key management. Use of these low-cost peripherals avoids associated requirements for safeguarding by recording and tracking peripheral serial numbers, since they do not store static keys.

Security module 14 may support multiple encryption key slots makes security module 14 capable of managing different types of encryption keys for different environments and systems, for example, with support for both financial network transactions as well as retail payment acquirer network transactions.

Security module 14 can poll the individual peripherals 30 in low level non-encrypted protocol to determine what type of peripheral is on each port and if that peripheral is capable of operating in an encrypted session or not. This allows a retail system to incorporate a mix of encryption capable and non-encryption capable peripherals.

With reference to Fig. 3, security module 14 may also be incorporated into an external security manager 78.

Security module 14 establishes an encrypted link with peripherals 30 in a similar fashion as in Fig. 1, except that security module 14 is external to computer 90.

Communications controller 84 facilitates communication between security module 14 and computer 90 and is analogous to secure I/O module 16. In an alternate embodiment, the functions of controller 84 may be combined with the functions of security module 14. The connection between external security management device 78 and computer 90 may include a USB connection.

With reference to Fig. 4, security module 14 may also be incorporated into a peripheral to which other data entry peripherals connect. In an example embodiment, security module 14 is incorporated into a PIN entry peripheral 80 to which a card reader 82 connects. PIN entry peripheral 80 and card reader 82 may be integrated into a common enclosure or be arranged in separate enclosures.

PIN entry peripheral 80 may additionally include controller 84, display 86, and keypad 88 for recording PINs.

Communications controller 84 communicates entered PIN data to computer 90 in an encrypted session. The connection between computer 90 and PIN entry peripheral 80 may include a USB connection. In an alternate embodiment, the functions of controller 84 may be combined with the functions of security module 14.

Security module 14 establishes an encrypted link with card reader 82 and re-encrypts data from card reader 82 before sending the data to controller 84 and computer 80.

Card reader 82 is capable of encrypting card data where it is reads it. Card reader 82 may include a seed key for identification and/or authentication when polled by security module 14.

Although the present invention has been described with particular reference to certain preferred embodiments thereof, variations and modifications of the present invention can be effected within the scope of the following claims.

## Claims

1. A method of securing payment information comprising:
sending a key to a peripheral by a security module (14) of a computer (10); and
establishing with the peripheral (30) using the key an encrypted session which is invisible to an operating system (20) executed by a processor (12) of the computer (10) by the security module (14).

2. The method of claim 1, further comprising:
polling the peripheral (30) with an unencrypted message including a request for a peripheral identifier of the peripheral by the security module (14);
receiving an unencrypted reply message containing the peripheral identifier; and
determining that the peripheral identifier is in a list of peripherals (30) capable of communicating over an encrypted connection.

3. The method of claim 1 or 2, wherein the key comprises a complimentary key to a seed key stored within the peripheral (30); wherein sending further comprises sending the complimentary key to the peripheral (30); and wherein the peripheral (30) combines the complimentary key with the seed key to form the session key.

4. The method of claim 3, wherein a copy of the seed key is also stored within the security module (14) and wherein establishing comprises:
combining the complimentary key with the copy of the seed key to form a copy of the session key by the security module (14).

5. The method of claim 4, wherein establishing further comprises:
sending a test message to the peripheral (30) and a command to encrypt and return an encrypted test message;
receiving a reply message from the peripheral (30); and
beginning the encrypted session when the reply message is decryptable and a decrypted reply message matches the test message.

6. The method of any preceding claim, further comprising:
sending a different key to another peripheral by the security module (14); and
establishing using the different key another encrypted session with the other peripheral by the security module (14).

7. The method of any preceding claim, wherein the key is different than a previous key from a previous encrypted session with the peripheral (30).

8. The method of any preceding claim, further comprising:
determining that the encrypted session has ended;
sending a different key to the peripheral (30) by the security module (14); and
establishing using the different key another encrypted session with the peripheral (30) by the security module (14).

9. The method of claim 2, further comprising:
polling the peripheral (30) during the encrypted session by the security module (14);
receiving a response from the peripheral (30) during the encrypted session by the security module (14) ; and
sending a different key to the peripheral (30) to continue the encrypted session by the security module (14).

10. The method of any preceding claim, further comprising:
monitoring the encrypted session for a session ending condition by the security module (14); and
terminating the encrypted session upon detection of the session ending condition.

11. The method of claim 2, further comprising:
monitoring the encrypted session for a session ending condition by the security module (14); and
terminating the encrypted session upon detection of the session ending condition;
wherein the session ending condition comprises a failure of the peripheral (30) to respond to a message from the security module (14).

12. The method of claim 2, further comprising:
monitoring the encrypted session for a session ending condition by the security module (14); and
terminating the encrypted session upon detection of the session ending condition;
wherein the session ending condition comprises receiving a response from the peripheral (30) without the peripheral identifier in the list.

13. The method of claim 2, further comprising:
polling another peripheral with another unencrypted message including a request for another peripheral identifier of the other peripheral by the security module; and
determining that the other peripheral identifier is not in the list of peripherals.

14. A computer (10) comprising:
a processor (12) which executes an operating system (20); and
a security module (14) which is invisible to the operating system (20) which establishes an encrypted session for receiving payment data from a payment peripheral (30).

15. The computer of claim 14, wherein the computer further comprises a first enclosure containing the processor and a second enclosure outside the first enclosure containing the security module.
